# EUROPÄISCHE PATENTANMELDUNG

(11) **EP 1 553 538 A1**
(43) Veröffentlichungstag der Anmeldung: **13.07.2005**
(21) Anmeldenummer: 05008469.8
(22) Anmeldetag: 07.10.1999
(51) Int. Cl.: G08C 19/02

(54) **Leistungsstarkes doppeltes Zweileiter-Messgerät**

(62) Teilanmeldung aus: 99119840.9
(71) Anmelder: Endress + Hauser GmbH + Co. KG, 79689 Maulburg (DE)
(72) Erfinder: Lubcke, Wolfgang, 79585 Steinen (DE); Capt, Jean-Gyl, 68440 Habsheim (FR); Gerst, Peter, 79576 Weil am Rhein (DE)
(74) Vertreter: Andres, Angelika Maria

(57) **Zusammenfassung**

Zum Ermöglichen eines Wandlers höherer Leistung besitzt das 4-20 mA Messgerät (61) ein mit dem ersten Anschlusspaar (3.,6.) der übergeordneten Einheit (57) zu verbindendes erstes Leitungspaar (1) für einen Signalstrom, und ein mit dem zweiten Anschlußpaar (4.,7.) zu verbindendes zweites Leitungspaar (3) für einen zusätzlichen Versorgungsstrom. Das Messgerät (61) ist so einfach und fehlerfrei an die Einheit (57) für Zweileiter-Messgeräte (59) anschliessbar. Mit galvanischer Trennung, speicherprogrammierbarer Steuerung (SPS), Prozessleitsystem (PLS), Personalcomputer (PC), sowie Busanschaltung.

## Beschreibung

Die Erfindung betrifft ein Meßgerät und eine Meßanordnung mit mindestens einem Meßgerät.

Bei in der Meß- und Regeltechnik üblichen Anwendungen, z.B. bei der Kontrolle, Steuerung und/oder Automatisierung komplexer Prozesse, sind üblicherweise mehrere Meßgeräte, z.B. Druck-, Temperatur-, Durchfluß- und/oder Füllstandsmeßgeräte, gleichzeitig im Einsatz.

Ein Meßgerät besteht in der Regel aus einem Meßaufnehmer, der eine physikalische Meßgröße erfaßt und in eine elektrische Größe umwandelt, und einer Elektronik, die die elektrische Größe in ein Meßsignal umwandelt. Die Meßgeräte müssen einzeln angeschlossen werden, d.h. sie müssen mit Energie versorgt werden und das Meßsignal muß einer übergeordneten Einheit zugeführt werden. Kernstück der übergeordneten Einheit ist üblicherweise eine Steuer- und/oder Regeleinheit, die die Meßsignale erfaßt, auswertet und in Abhängigkeit von den momentanen Meßwerten Anzeige-, Steuer- und/oder Regelsignale für die Kontrolle, Steuerung und/oder Automatisierung eines Prozesses liefert. Beispiele hierfür sind speicherprogrammierbare Steuerungen (SPS), Prozeßleitsysteme (PLS) oder Personalcomputer (PC).

Um den Arbeitsaufwand, der bei der Installation der Meßgeräte anfällt, gering zu halten werden in der Meß- und Regeltechnik bevorzugt Meßgeräte mit nur einem Leitungspaar eingesetzt, über das sowohl die Versorgung des Meßgeräts als auch die Signalübertragung erfolgt. Diese Geräte werden häufig als 2-Draht-Meßgeräte bezeichnet. Standardmäßig werden solche Meßgeräte mit 12 V gespeist und das Meßgerät steuert einen über das Leitungspaar fließenden Strom in Abhängigkeit von einem momentanen Meßwert. Das Meßsignal ist bei diesen Meßgeräten ein Signalstrom. Gemäß einem in der Meß- und Regeltechnik üblichen Standard wird der Signalstrom in Abhängigkeit von dem momentanen Meßwert auf Werte zwischen einem minimalen Signalstrom von 4 mA und einem maximalen Signalstrom von 20 mA eingestellt.

Da über das Leitungspaar sowohl die Versorgung als auch die Signalübertragung erfolgt steht dem Meßgerät bei einer Speisespannung von 12 V und einem Signalstrom von 4 mA nur eine Leistung von 48 mW zur Verfügung. Dies ist für eine große Vielzahl von Meßgeräten völlig ausreichend. In großen Anlagen sind daher üblicherweise Anschlußblocks vorgesehen, die eine Vielzahl identischer Anschlußpaare für den Anschluß dieser Leitungspaare an die übergeordnete Einheit aufweisen. Durch diese Standardisierung der Anschlußweise kann sehr einfach und schnell und damit kostengünstig eine große Anzahl von Meßgeräten angeschlossen werden. Da alle Leitungspaare und alle Anschlußpaare identisch sind, sind Verdrahtungsfehler praktisch ausgeschlossen.

Es gibt jedoch auch Meßgeräte, wie z.B. hochgenaue mit Mikrowellen arbeitende Füllstandsmeßgeräte, mit Ultraschall arbeitende Füllstandsmeßgeräte oder Durchflußmeßgeräte, für die diese geringe Leistung nicht ausreicht. Damit diese Meßgeräte trotzdem in Verbindung mit dem zuvor beschriebenen Standard einsetzbar sind, weisen diese Meßgeräte üblicherweise zwei Leitungspaare auf. Über eines der Leitungspaare wird das Meßgerät versorgt und über das andere fließt ein dem zuvor beschriebenen Standard entsprechender Signalstrom. Für die Versorgung ist es üblicherweise erforderlich an die normale Stromleitung, die z.B. 230 V Wechselspannung führt, einen Transformator und einen Gleichrichter anzuschließen, um z.B. eine Versorgungsspannung von üblicherweise 24 V Gleichspannung für das Meßgerät bereitzustellen. Dies ist sehr aufwendig und es besteht die Gefahr, daß die beiden Leitungspaare beim Anschluß des Geräts vertauscht werden können.

Es ist eine Aufgabe der Erfindung, ein Meßgerät anzugeben, das sehr einfach und fehlerfrei an eine übergeordnete Einheit elektrisch anschließbar ist.

Hierzu besteht die Erfindung in einem Meßgerät zum Anschluß an eine mindestens ein erstes und ein identisches zweites Anschlußpaar aufweisende übergeordnete Einheit, welches umfaßt:
- ein erstes mit dem ersten Anschlußpaar zu verbindendes erstes Leitungspaar,
   -- über das im Betrieb ein Signalstrom fließt,
      --- wobei der Signalstrom ein Maß für einen momentanen Meßwert ist, und

   - ein zweites mit dem zweiten Anschlußpaar zu verbindendes zweites Leitungspaar,

   -- über das im Betrieb ein Versorgungsstrom fließt,

   --- dessen Wert größer oder gleich einem minimalen Signalstrom und kleiner oder gleich einem maximalen Signalstrom ist. Gemäß einer Ausgestaltung der Erfindung steht der Versorgungsstrom und mindestens ein Anteil des Signalstromes für die Versorgung des Meßgeräts zur Verfügung.

Gemäß einer weiteren Ausgestaltung beträgt der minimale Signalstrom 4 mA und der maximale Signalstrom 20 mA.

Gemäß einer weiteren Ausgestaltung ist an jedes Leitungspaar eingangsseitig eine Strom-Spannungsbegrenzung angeschlossen.

Gemäß einer weiteren Ausgestaltung ist das erste Leitungspaar mit einem ersten Stromkreis und das zweite Leitungspaar mit einem zweiten Stromkreis verbunden und der erste und der zweite Stromkreis sind galvanisch voneinander getrennt.

Weiterhin besteht die Erfindung in einer Meßanordnung mit mindestens einem erfindungsgemäßen Meßgerät, bei der die übergeordnete Einheit eine Steuer- und/oder Regeleinheit, insb. eine speicherprogrammierbare Steuerung (SPS), ein Prozeßleitsystem (PLS) oder einen Personalcomputer (PC), umfaßt.

Gemäß einer Ausgestaltung der Meßanordnung weist die übergeordnete Einheit eine oder mehrere Batterien von Meßumformerspeiseeinheiten auf, wobei mindestens eine Batterie mindestens zwei Meßumformerspeiseeinheiten aufweist und jede Meßumformerspeiseeinheit ein Anschlußpaar aufweist.

Gemäß einer weiteren Ausgestaltung ist jede Batterie von Meßumformerspeiseeinheiten zur Übertragung der Meßwerte der daran angeschlossenen Meßgeräte über eine Busanschaltung und eine Busleitung mit der Steuer- und/oder Regeleinheit verbunden.

Die Erfindung und weitere Vorteile werden nun anhand der Figuren der Zeichnung, in denen zwei Ausführungsbeispiele eines Meßgeräts und drei Ausführungsbeispiele einer Meßanordnung dargestellt sind, näher erläutert; gleiche Elemente sind in den Figuren mit denselben Bezugszeichen versehen.
- Fig. 1: zeigt ein Blockschaltild eines erfindungsgemäßen Meßgeräts mit zwei Leitungspaaren, die zwei separate Stromkreise versorgen;
- Fig. 2: zeigt ein Blockschaltbild eines Meßgerät, bei dem über das zweite Leitungspaar zugeführte Energie über einen Transformator mit mehreren Ausgängen auf mehrere Endverbraucher aufgeteilt ist;
- Fig. 3: zeigt eine Meßanordnung mit mindestens einem

- Fig. 4: erfindungsgemäßen Meßgerät; zeigt eine Meßanordnung, bei der die übergeordnete Einheit eine Steuer- und/oder Regeleinheit und eine entfernt davon angeordneten Batterie von Meßumformerspeisegeräten aufweist; und
- Fig. 5: zeigt eine Meßanordnung, die mehrere Batterien von Meßumformerspeiseeinheiten aufweist, die jeweils über ein Busanschaltung und eine Busleitung mit einer Steuer- und/oder Regeleinheit verbunden sind.

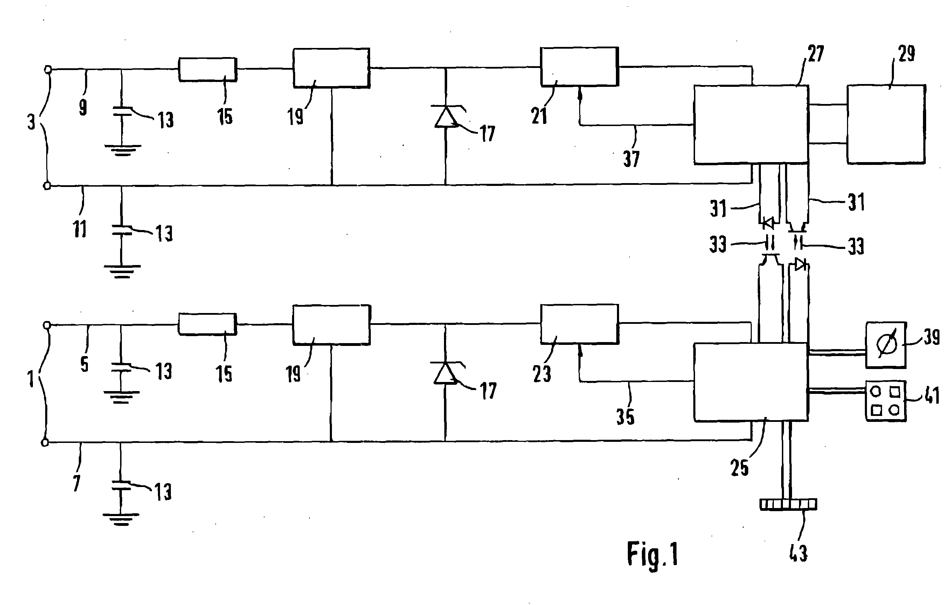

In Fig. 1 ist ein Blockschaltbild eines Meßgeräts dargestellt, daß an eine mindestens ein erstes und ein identisches zweites Anschlußpaar aufweisende übergeordnete Einheit anschließbar ist.

Hierzu weist das Meßgerät ein mit dem ersten Anschlußpaar zu verbindendes erstes Leitungspaar 1 und ein mit dem zweiten Anschlußpaar zu verbindendes zweites Leitungspaar 3 auf.

Das erste und das zweite Leitungspaar 1, 3 weisen jeweils eine erste und eine zweite Leitung 5, 7, 9, 11 auf, von denen jede über einen Kondensator 13 geerdet ist. Die Kondensatoren 13 dienen dazu Störsignale herauszufiltern.

An jedes Leitungspaar 1, 3 ist eingangsseitig eine Strom-Spannungsbegrenzung angeschlossen. Eine solche Strom-Spannungsbegrenzung schützt das Meßgerät vor zu hohen Strömen und/oder Spannungen. Bei einer Begrenzung von Strom und Spannung auf Werte, bei denen eine Funkenbildung im Meßgerät sicher ausgeschlossen werden kann, ist der Einsatz des Meßgeräts in explosionsgefährdeten Bereichen möglich.

Bei dem in Fig. 1 dargestellten Ausführungsbeispiel erfolgt die Begrenzung des Stroms durch eine jeweils in der ersten Leitung 5, 9 eines Leitungspaares 1, 3 eingefügte Sicherung 15. Die Spannung ist durch eine zwischen die jeweilige erste und zweite Leitung 5, 9, 7, 11 des ersten und des zweiten Leitungspaares 1, 3 geschaltete Zener-Diode 17 begrenzt.

Zusätzlich zu den Zener-Dioden 17 kann jeweils eine Spannungsstabilisierung 19 vorgesehen sein. Diese ist z.B. wie in Fig. 1 gezeigt in die jeweilige erste Leitung 5, 9 eingefügt und zur Erfassung der aktuell anliegenden Spannung mit der jeweiligen zweiten Leitung 7, 11 verbunden.

Im Anschluß an die vorbeschriebene eingangsseitige Strom-Spannungsbegrenzung weist die erste Leitung 5, 9 jedes Leitungspaares 1, 3 jeweils eine steuerbare Stromquelle 21, 23 auf, die einen über das jeweilige Leitungspaar 1, 3 fließenden Strom in Abhängigkeit von einem Steuersignal auf einen bestimmten Wert einstellt.

An das erste Leitungspaar 1 ist eine Elektronik 25 angeschlossen. Das zweite Leitungspaar 3 versorgt eine Meßelektronik 27 und einen daran angeschlossenen Meßaufnehmer 29. Der Meßaufnehmer 29 erfaßt eine physikalische Meßgröße, z.B. einen Druck, einen Füllstand in einem Behälter oder eine Durchflußmenge durch ein Rohr und wandelt diese in eine elektrische Größe, z.B. eine Spannung, einen Strom, eine Widerstandsänderung, eine Kapazitätsänderung oder ein Signal, um. Die elektrische Größe wird mittels der Meßelektronik 27 erfaßt und einer weiteren Auswertung und/oder Verarbeitung zugänglich gemacht.

Die Meßelektronik 27 ist mit der Elektronik 25 in dem Ausführungsbeispiel von Fig. 1 durch Signalleitungen 31 verbunden, über die Informationen ausgetauscht werden können. Diese Verbindung ist in dem gezeigten Ausführungsbeispiel bidirektional und weist vorzugsweise eine galvanische Trennung 33 auf. In dem Ausführungsbeispiel von Fig. 1 ist die galvanische Trennung 33 durch zwei Optokoppler realisiert.

Der endgültige Meßwert wird z.B. von der Meßelektronik 27 bestimmt und an die Elektronik 25 übertragen. Genauso kann aber auch ein Rohsignal von der Meßelektronik 27 an die Elektronik 25 übermittelt werden, die dann aus dem Rohsignal den Meßwert bestimmt.

Die Elektronik 25 erzeugt im Betrieb ein Steuersignal, das von dem momentanen Meßwert abhängt und über eine Signalleitung 35 an der Stromquelle 23 anliegt. Das Steuersignal bewirkt, daß die Stromquelle 23 im Betrieb über das erste Leitungspaar 1 einen Signalstrom fließen läßt, der ein Maß für einen momentanen Meßwert ist.

Gemäß einem in der Meß- und Regeltechnik üblichen Standard variiert der Signalstrom in Abhängigkeit vom Meßwert zwischen einem minimalen Signalstrom von 4 mA und einem maximalen Signalstrom von 20 mA. Die erforderliche Leistung wird von der übergeordneten Einheit bereit gestellt. Ein Signalstrom von mehr als 20 mA oder weniger als 4 mA wird üblicherweise von der übergeordneten Einheit als Fehlfunktion erkannt und bewirkt die Auslösung eines Alarms und/oder die Einleitung einer prozeßspezifischen sicherheitsgerichteten Handlung.

Die Meßelektronik 27 erzeugt im Betrieb ebenfalls ein Steuersignal, das über eine Signalleitung 37 an der Stromquelle 21 anliegt. Dieses Steuersignal ist unabhängig vom momentanen Meßwert. Das Steuersignal bewirkt, daß die Stromquelle 21 im Betrieb über das zweite Leitungspaar 3 einen Versorgungsstrom fließen läßt.

Erfindungsgemäß ist das Steuersignal so ausgelegt, daß der Versorgungsstrom im normalen Betrieb immer einen Wert aufweist, der größer oder gleich dem minimalen Signalstrom und kleiner oder gleich dem maximalen Signalstrom ist. Dabei wird hier ebenfalls der in der Meß- und Regeltechnik übliche Standard von 4 mA bis 20 mA verwendet. Bei einem Meßgerät, das permanent viel Leistung benötigt wird der Versorgungstrom vorzugsweise immer gleich dem maximalen Signalstrom sein. Bei einem Meßgerät, das abhängig vom Meßvorgang z.B. nur in bestimmten Zeitintervallen eine hohe Leistung benötigt, ansonsten aber mit deutlich weniger Energie auskommt, empfiehlt es sich den Versorgungsstrom über das Steuersignal gemäß aktuellen Energiebedarf zu variieren.

Das Meßgerät kann je nach Bedarf eine Vorortanzeige 39, ein Bedienfeld 41 und/oder eine Programmierschnittstelle 43 aufweisen. Die Vorortanzeige 39 dient z.B. zur Anzeige des aktuellen Meßwerts oder aber in Verbindung mit dem Bedienfeld 41 zur Anzeige der über das Bedienfeld 41 eingegebenen Daten. Über das Bedienfeld 41 kann z.B. eine Parametrierung, ein Abgleich und/oder eine Einstellung eines Meßbereichs des Meßgeräts am Einsatzort erfolgen. Über die Programmierschnittstelle 43 kann z.B. ein Handbediengerät angeschlossen werden.

Anzeige 39, Bedienfeld 41 und/oder Programmierschnittstelle 43 sind, wie in Fig. 1 dargestellt, an die Elektronik 25 anschließbar und werden über die Elektronik 25 über das erste Leitungspaar 1 versorgt.

Sowohl die Meßelektronik 27 als auch die Elektronik 25 können Spannungsregler enthalten, die eine über die übergeordnete Einheit an dem ersten und dem zweiten Leitungspaar 1, 3 anliegende Spannung auf Werte transformiert, die den Bedürfnissen der Elektronik 25, der Meßelektronik 27, des Meßaufnehmers 29, der Anzeige 39, des Bedienfelds 41 und der Programmierschnittstelle 43 angepaßt sind.

Vorzugsweise wird bei der Auslegung des Meßgeräts so vorgegangen, daß die Funktionsblöcke des Meßgeräts in analoge und digitale Funktionsblöcke aufgeteilt sind. Die analogen Funktionsblöcke werden vorzugsweise in die Meßelektronik 27 und die digitalen Funktionsblöcke werden vorzugsweise in die Elektronik 25 integriert. Dies bietet den vorteil, daß man mit sehr wenigen Spannungsreglern auskommt. Die digitalen Funktionsblöcke weisen in der Regel einen deutlich geringeren Energiebedarf als die analogen Funktionsblöcke und der Meßaufnehmer 29 auf. Bei der vorbeschriebenen Aufteilung werden folglich die Funktionsblöcke mit dem niedrigeren Energiebedarf über das erste Leitungspaar 1 mit dem Signalstrom versorgt. Die Funktionsblöcke mit dem höheren Energiebedarf werden über das zweite Leitungspaar 3 mit dem Versorgungsstrom versorgt. Für die Versorgung des Meßgeräts steht somit der Versorgungsstrom und mindestens ein Anteil des Signalstromes zur Verfügung.

Das erste Leitungspaar 1 ist mit einem ersten Stromkreis verbunden, der die Elektronik 25 enthält. Das zweite Leitungspaar 3 ist mit einem zweiten Stromkreis verbunden, der die Meßelektronik 27 und den Meßaufnehmer 29 enthält. Die beiden Stromkreise sind voneinander getrennt und lediglich über die Signalleitungen 31 verbunden. Da die Signalleitungen 31 eine galvanische Trennung 33 aufweisen, sind auch die beiden Stromkreise galvanisch voneinander getrennt.

Aus der Sicht der übergeordneten Einheit sind die beiden Leitungspaare 1, 3 hinsichtlich deren Energieversorgung identisch. Für die übergeordnete Einheit verhält sich das Meßgerät elektrisch genau so als ob zwei 2-Draht-Meßgeräte angeschlossen wären. Beide 2-Draht-Meßgerätegenügen dem vorgenannten in der Meß- und Regeltechnik üblichen Standard bei dem der Signalstrom Werte von 4 mA bis 20 mA annimmt.

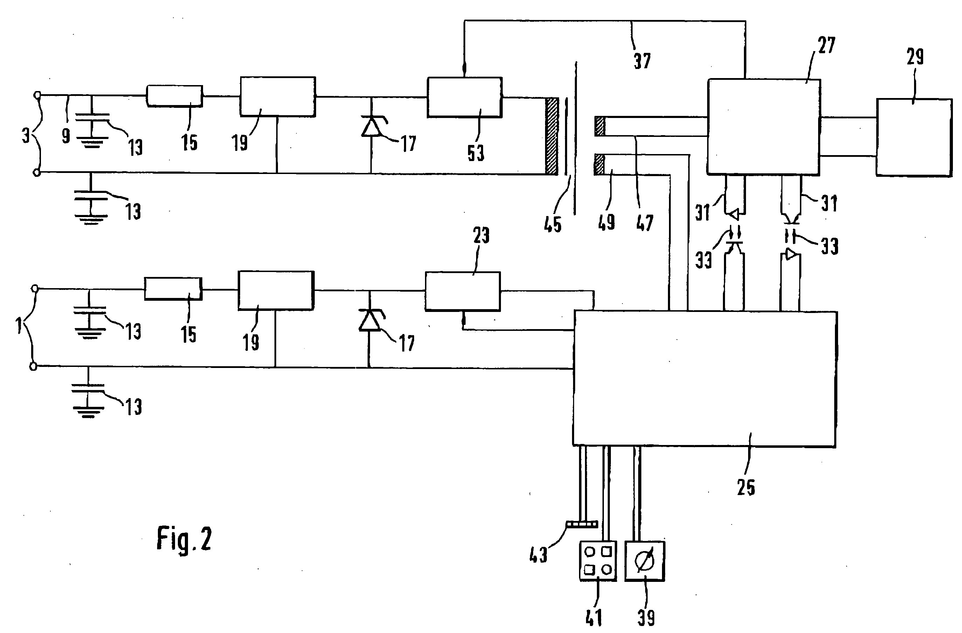

Fig. 2 zeigt ein weiteres Ausführungsbeispiel eines erfindungsgemäßen Meßgeräts. Aufgrund der relativ weitgehenden Übereinstimmung werden nachfolgend lediglich die Unterschiede zu dem in Fig. 1 dargestellten Ausführungsbeispiel näher beschrieben.

Der wesentlich Unterschied besteht in der Aufteilung der vom Meßgerät aufgenommenen Leistung.

Es ist in dem zweiten Stromkreis ein Übertrager 45 vorgesehen, der primärseitig über das zweite Leitungspaar 3 gespeist wird und sekundärseitig zwei Ausgänge 47, 49 aufweist. Über den ersten Ausgang 47 werden die Meßelektronik 27 und der Meßaufnehmer 29 versorgt. Der zweite Ausgang 49 ist mit der Elektronik 25 verbunden. Die Elektronik 25 wird also zum einen, genau wie bei dem in Fig. 1 dargestellten Ausführungsbeispiel, über den im ersten Leitungspaar 1 fließenden Signalstrom versorgt, zusätzlich bezieht sie jedoch auch über den zweiten Ausgang 49 des Übertragers 45 Energie, die dem Meßgerät über das zweite Leitungspaar 3 zugeführt ist.

Die Meßelektronik 27 liefert auch bei dem in Fig. 2 gezeigten Ausführungsbeispiel ein Steuersignal, das zur Einstellung des im Primärkreis über das zweite Leitungspaar 3 fließenden Versorgungsstroms dient. Das Steuersignal liegt über die Signalleitung 37 an einer im Primärkreis angeordneten Regeleinheit 53 an, die den Versorgungsstrom entsprechend einstellt.

Erfindungsgemäß ist auch hier das Steuersignal so ausgelegt, daß der Versorgungsstrom im normalen Betrieb immer einen Wert aufweist, der größer oder gleich dem minimalen Signalstrom und kleiner oder gleich dem maximalen Signalstrom ist.

Durch den Übertrager 45 ist auch bei diesem Ausführungsbeispiel eine galvanische Trennung zwischen den beiden Stromkreisen gewährleistet.

Auf völlig analoge Weise kann natürlich auch ein Teil der über den Signalstrom zur Verfügung stehenden Leistung galvanisch getrennt der Meßelektronik 27 und/oder dem Meßaufnehmer 29 zugeführt werden, indem ein Übertrager in den ersten Stromkreis plaziert wird, der über einen Ausgang mit der Elektronik 25 und über einen weiteren Ausgang mit der Meßelektronik 27 und/oder dem Meßaufnehmer 29 verbunden ist.

Aus der Sicht der übergeordneten Einheit sind die beiden Leitungspaare 1, 3 auch bei diesem Ausführungsbeispiel hinsichtlich deren Energieversorgung identisch. Für die übergeordnete Einheit verhält sich das Meßgerät elektrisch genau so als ob zwei 2-Draht-Meßgeräte angeschlossen wären. Beide 2-Draht-Meßgerätegenügen dem vorgenannten in der Meß- und Regeltechnik üblichen Standard bei dem der Signalstrom Werte von 4 mA bis 20 mA annimmt.

Ein besonderer Vorteil ist, daß die erfindungsgemäßen Meßgeräte nicht über eine Netzspannung versorgt werden müssen. Dadurch treten bei erfindungsgemäßen Meßgeräten nur die geringen Signal- und Versorgungsströme auf. Dies erhöht die Sicherheit, insb. in Anlagen oder Einsatzorten, wo z.B. Explosionsgefahr besteht deutlich.

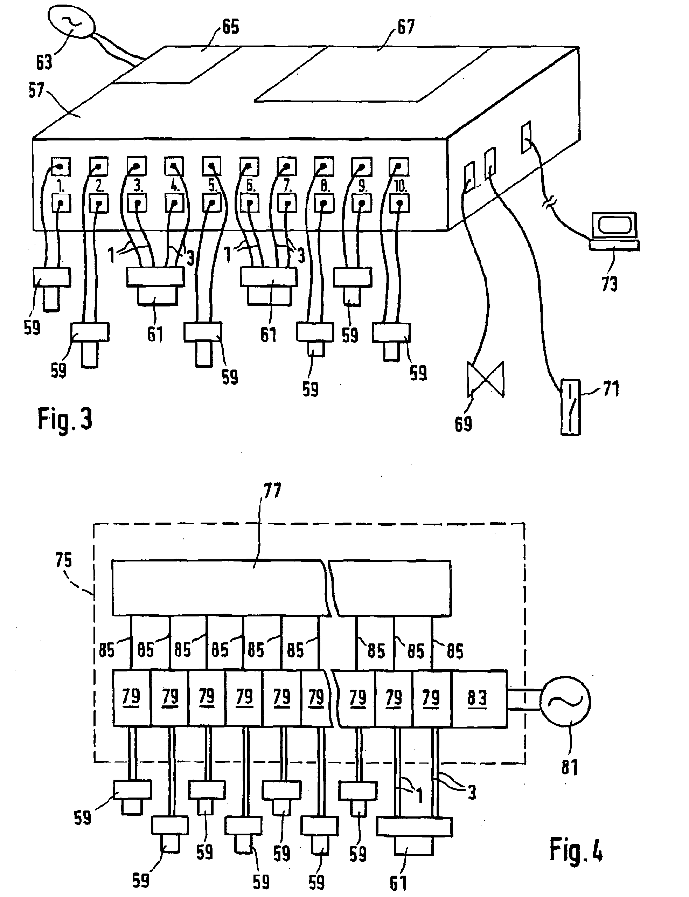

Die Figuren 3 bis 5 zeigen drei verschiedene Meßanordnung mit erfindungsgemäßen Meßgeräten.

In Fig. 3 ist eine Meßanordnung mit einer übergeordneten Einheit 57 dargestellt, an die sechs konventionelle 2-Draht-Meßgeräte 59 und zwei erfindungsgemäße Meßgeräte 61 angeschlossen sind.

Die übergeordnete Einheit 57 ist z.B. eine speicherprogrammierbare Steuerung oder ein Prozeßleitsystem. Sie weist in dem gezeigten Ausführungsbeispiel der Übersicht halber lediglich 10 identische mit 1. bis 10. durchnumerierte Anschlußpaare auf. Jedes Anschlußpaar ist standardmäßig für den Anschluß, die Versorgung und die Übermittlung eines Meßwerts in Form eines Signalstromes eines 2-Draht-Meßgeräts ausgelegt.

Die übergeordnete Einheit 57 weist ein mit einer Spannungsquelle 63 verbundenes Netzteil 65 auf, über das die einzelnen Anschlußpaare 1. bis 10. versorgt sind. Jedem Anschlußpaar 1. bis 10. ist eine Aufnahmeeinheit zugeordnet, die einen über Anschlußpaar 1. bis 10. fließenden Strom erfaßt und ein dem Strom entsprechendes Signal erzeugt und einem intelligenten Kern 67 der übergeordneten Einheit 57, z.B. einem Mikroprozessor, zuführt. In dem intelligenten Kern 67 werden alle eingehenden Meßwerte überwacht und gemäß einem in dem intelligenten Kern 67 gespeicherten Ablaufplan in Abhängigkeit von den momentanen Meßwerten Anzeige-, Steuer-, Regel- oder Schaltvorgange ausgelöst. Dies ist in Fig. 3 symbolisch dargestellt durch einen ersten Ausgang über den die übergeordnete Einheit 57 ein Ventil 69, einen zweiten Ausgang, über den die übergeordnete Einheit 57 einen Schalter 71 und einen dritten Ausgang, über den die übergeordnete Einheit 57 eine Anzeige 73 ansteuert. Als Anzeige kann selbstverständlich auch ein Personalcomputer dienen, der nicht nur einen Meßwert anzeigt, sondern z.B. auch einen Prozeßablauf einer ganzen Anlage visualisieren kann.

Bei dem dargestellten Ausführungsbeispiele sind an das 1., das 2., das 5., das 8., das 9. und das 10. Anschlußpaar konventionelle 2-Drahtmeßgeräte 59 angeschlossen. Der jeweils über eines dieser Anschlußpaare 1., 2., 5., 8., 9., 10. fließende Strom entspricht einem Meßwert des jeweiligen konventionellen 2-Draht-Meßgeräts 59.

An die beiden Anschlußpaare 3. und 4. ist ein erfindungsgemäßes Meßgerät 61 angeschlossen, indem das erste Leitungspaar 1 mit dem 3. Anschlußpaar und das zweite Leitungspaar 3 mit dem 4. Anschlußpaar verbunden ist. An die Anschlußpaare 6, und 7, ist ein weiteres erfindungsgemäßes Meßgerät 61 angeschlossen, indem dessen erstes Leitungspaar 1 mit dem 6. Anschlußpaar und dessen zweites Leitungspaar 3 mit dem 7. Anschlußpaar verbunden ist.

Hinsichtlich des elektrischen Anschlusses unterscheiden sich die erfindungsgemäßen Meßgerät 61 in keiner Weise von den konventionellen 2-Draht-Meßgeräten 59. Es wird bei allen Geräten jeweils ein Leitungspaar mit einem Anschlußpaar verbunden. Im Ablaufdiagramm im intelligenten Kern 67 der übergeordneten Einheit 57 ist festgelegt, welchem Anschlußpaar 1. bis 10. welche Bedeutung zukommt. Dort ist z.B. abgelegt, das der über das erste Anschlußpaar 1. erhaltene Meßwert ein Füllstand in einem bestimmten Behälter ist. Im Ablaufdiagramm kann z.B. weiter festgeschrieben sein, daß bei Erreichen eines bestimmten Füllstandes ein über einen Ausgang der übergeordneten Einheit 57 ansprechbares Ablaßventil dieses Behälters zu öffnen ist.

Ein Unterschied zwischen den konventionellen 2-Draht-Meßgeräten 59 und den erfindungsgemäßen Meßgeräten 61 besteht darin, daß der über die jeweiligen ersten Leitungspaare 1 fließende Strom ein Signalstrom ist, der einen Meßwert darstellt, der von der übergeordneten Einheit 57 erfaßt und verwendet wird. Der über das jeweilige zweite Leitungspaar 3 fließende Versorgungsstrom wird entweder von der übergeordneten Einheit 57 vollständig ignoriert, z.B. indem der in dem Ablaufdiagramm gar nicht auftaucht, oder aber es kann ihm eine Alarmfunktion oder ähnliches zugewiesen sein. Eine Alarmfunktion könnte z.B. so gestaltet sein, daß die übergeordnete Einheit 57 einen Alarm auslöst bzw. eine Fehlfunktion meldet, wenn der Versorgungsstrom größer als der maximale Signalstrom oder kleiner als der minimale Signalstrom ist. Zusätzlich kann im Ablaufdiagramm eine sicherheitsgerichtete Abfolge von Aktionen für den Fall einer Fehlfunktion des Meßgeräts vorgesehen sein.

Fig. 4 zeigt ein weiteres Ausführungsbeispiel einer Meßanordnung mit mindestens einem erfindungsgemäßen Meßgerät 61. Der wesentliche Unterschied zu der in Fig. 3 dargestellten Meßanordnung besteht darin, daß die übergeordnete Einheit 75 von Fig. 4 aus einer Steuer- und/oder Regeleinheit 77, z.B. einer speicherprogrammierbare Steuerung (SPS) oder einem Prozeßleitsystem (PLS), und einer räumlich getrennt davon angeordneten Batterie von in Reihe geschalteten Meßumformerspeiseeinheiten 79 besteht. Die Batterie wird über ein mit einer Spannungsquelle 81 verbundenes Netzteil 83 versorgt. Jede Meßumformerspeiseeinheit 79 weist ein Anschlußpaar für ein 2-Draht-Meßgerät auf. Damit ein erfindungsgemäßes Meßgerät anschließbar ist muß die Batterie mindestens zwei Meßumformerspeiseeinheiten 79 aufweisen. Üblicherweise weisen solche Batterien jedoch deutlich mehr als zwei, z.B. 10 oder 64 Meßumformerspeiseeinheiten auf.

Jede Meßumformerspeiseeinheit 79 ist über deren Anschlußpaar mit einem Meßgerät verbindbar, sie speist das Meßgerät, erfaßt einen über das mit ihrem Anschlußpaar verbundenen Leitungspaar fließenden Strom und führt über eine Signalleitung 85 ein dem Strom entsprechendes Signal an die Steuer- und/oder Regeleinheit 77 ab. Auch bei diesem Ausführungsbeispiel ist also eine Anzahl identischer Anschlußpaare vorgesehen und für den Anschluß von herkömmlichen 2-Draht-Meßgeräten 59 und erfindungsgemäßen Meßgeräten 61 gilt das zuvor in Verbindung mit dem in Fig. 3 dargestellten Ausführungsbeispiel gesagte.

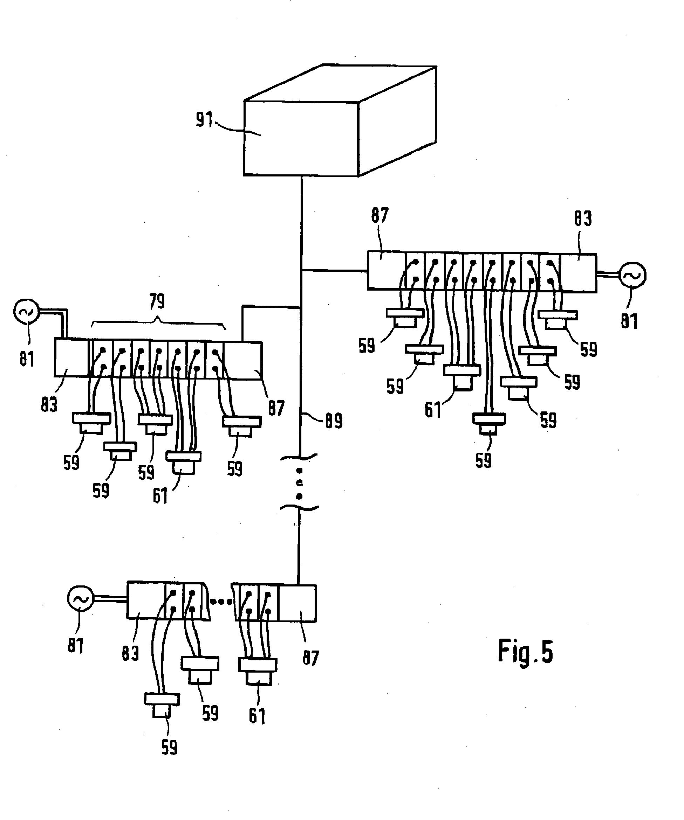

Fig. 5 zeigt ein weiteres Ausführungsbeispiel einer Meßanordnung. Die Meßanordnung weist mehrere Batterien von Meßumformspeiseeinheiten 79 auf, die jeweils über ein mit einer Spannungsquelle 81 verbundenes Netzteil 83 gespeist sind. Genau wie bei dem in Fig. 4 dargestellten Ausführungsbeispiel weist auch hier jede Meßumformerspeiseeinheit 79 ein Anschlußpaar auf und es sind sowohl herkömmliche 2-Draht-Meßgeräte 59 als auch erfindungsgemäße Meßgeräte 61 an die Meßumformerspeiseeinheiten 79 angeschlossen.

Jede Batterie von Meßumformerspeiseeinheiten ist zur Übertragung der Meßwerte der daran angeschlossenen Meßgeräte 59, 61 über eine Busanschaltung 87 und eine Busleitung 89 mit einer Steuer- und/oder Regeleinheit 91, z.B. einer speicherprogrammierbaren Steuerung (SPS), einem Prozeßleitsystem (PLS) oder einem Personalcomputer (PC) verbunden.

Alle drei Meßanordnungen bringen die Vorteile der erfindungsgemäßen Meßgeräte 61 deutlich hervor. So können diese Geräte, obwohl sie mehr Energie benötigen als die 2-Draht-Meßgeräte 59, bei denen ja wie zuvor beschrieben die Versorgung und die Meßwertübertragung über ein und dasselbe Leitungspaar erfolgt und deshalb nur eine begrenzte Leistung zur Verfügung steht, ohne weiteres in einer Meßanordnung eingesetzt werden, die an sich ausschließlich für 2-Draht-Meßgeräte ausgelegt ist. Zusätzliche Versorgungsanschlüsse, wie sie herkömmliche Meßgeräte mit einem höheren Energiebedarf aufweisen, sind aufgrund der erfindungsgemäßen Ausbildung der Meßgeräte 61 nicht mehr erforderlich. Die erfindungsgemäßen Meßgeräte 61 werden zusammen mit den 2-Draht-Meßgeräten und auf identische Art und Weise an die übergeordnete Einheit angeschlossen. Ein zusätzlicher Arbeitsgangs ist nicht erforderlich und Fehler aufgrund von Vertauschungen der Anschlüsse dieser Geräte sind ausgeschlossen.

## Patentansprüche

1. Meßanordnung, die ein Meßgerät (61) sowie eine mit diesem verbundene übergeordnete Einheit (57, 75) umfaßt, wobei Meßgerät (61) und übergeordnete Einheit (57, 75) über ein erstes Leitungspaar (1) sowie über ein zweites Leitungspaar (3) miteinander elektrisch verbunden sind, und wobei die Meßanordnung so ausgelegt ist, daß im Betrieb über das erste Leitungspaar (1) ein Signalstrom fließt, der ein Maß für einen vom Meßgerät (61) erzeugten Meßwert ist, und über das zweite Leitungspaar (3) ein Versorgungsstrom fließt, **dadurch gekennzeichnet, daß** der Versorgungsstrom und mindestens ein Anteil des Signalstromes für die Versorgung des Meßgeräts (61) zur Verfügung steht.

2. Meßanordnung nach Anspruch 1, **dadurch gekennzeichnet, daß** in der übergeordneten Einheit (57, 75) mindestens zwei für die Versorgung von 2-Draht-Meßgeräten geeignete Meßumformerspeiseeinheiten (79) vorgesehen sind und daß jedes der beiden Leitungspaare (1, 3) mit jeweils einer der beiden Meßumformerspeiseeinheiten (79) elektrisch verbunden ist.

3. Meßanordnung nach Anspruch 1, **dadurch gekennzeichnet, daß** in der übergeordneten Einheit (57, 75) mindestens zwei für die Versorgung von 2-Draht-Meßgeräten geeignete Meßumformerspeiseeinheiten (79) vorgesehen sind und daß jede der beiden Meßumformerspeiseeinheiten (79) mit jeweils einem der beiden Leitungspaare (1, 3) elektrisch verbunden ist.

4. Meßanordnung nach einem der vorherigen Ansprüche, **dadurch gekennzeichnet, daß** der Signalstrom in Abhängigkeit vom Meßwert zwischen einem minimalen Signalstrom und einem maximalen Signalstrom variiert.

5. Meßanordnung nach einem der vorherigen Ansprüche, **dadurch gekennzeichnet, daß** der Versorgungsstrom im normalen Betrieb des Meßgeräts (61) größer oder gleich einem minimalen Signalstrom ist.

6. Meßgerät (61) zum Anschluß an eine übergeordnete Einheit (57, 75) über mindestens ein erstes und ein zweites Leitungspaar (1, 3), wobei das Meßgerät (61) so ausgelegt ist, daß es über das erste Leitungspaar (1) einen Signalstrom fließen läßt, der einen vom Meßgerät (61) erzeugten Meßwert repräsentiert, und über das zweite Leitungspaar (3) mit einem Versorgungsstrom versorgt wird, **dadurch gekennzeichnet, daß** das Meßgerät (61) so ausgelegt ist, daß der Versorgungsstrom und mindestens ein Anteil des Signalstromes für die Versorgung des Meßgeräts (61) zur Verfügung steht.

7. Meßgerät (61) nach dem vorherigen Anspruch, **dadurch gekennzeichnet, daß** für jedes der beiden Leitungspaare (1, 3) jeweils eine Strom-Spannungsbegrenzung (15, 17) vorgesehen ist.

8. Meßgerät (61) nach Anspruch 6 oder 12, **dadurch gekennzeichnet, daß** die beiden Leitungspaare (1, 3) voneinander galvanisch getrennt sind.

9. Meßgerät (61) nach einem der Ansprüche 6 bis 8, **dadurch gekennzeichnet, daß** der Signalstrom in Abhängigkeit vom Meßwert zwischen einem minimalen Signalstrom und einem maximalen Signalstrom variiert.

10. Meßgerät (61) nach einem der Ansprüche 6 bis 9, **dadurch gekennzeichnet, daß** der Versorgungsstrom im normalen Betrieb des Meßgeräts (61) größer oder gleich einem minimalen Signalstrom ist.
